# EUROPÄISCHE PATENTSCHRIFT

(11) **EP 0 696 613 B1**
(45) Veröffentlichungstag und Bekanntmachung des Hinweises auf die Patenterteilung: **03.03.1999**
(21) Anmeldenummer: 95111992.4
(22) Anmeldetag: 31.07.1995
(51) Int. Cl.: C08K 5/375, C08K 5/01, C08L 21/00, C08C 19/08

(54) **Geformte, paraffinhaltige Mastiziermittel**
Preformed, paraffin-containing masticating agent
Agent de mastication préformé, contenant de la paraffine

(30) Priorität: 11.08.1994 DE 4428457
(43) Veröffentlichungstag der Anmeldung: 14.02.1996
(73) Patentinhaber: BAYER AG, 51368 Leverkusen (DE)
(72) Erfinder: Buding, Hartmuth, Dr., D-52445 Titz (DE)

(56) Entgegenhaltungen:
- EP-A- 0 687 707
- DE-A- 2 440 092
- 'rubber handbook 8th edition' 1990 , SWEDISH INSTITUTION OF RUBBER TECHNOLOGY , GÖTEBURG 177000 * Pepton 44 Prills * * Pepton 44T Prills * * Seite 186 *
- 'Produktübersicht Synthesekautschuke und Kautschuk- Chemikalien' Dezember 1994 , BAYER AG , LEVERKUSEN, DE * Tabelle Renacit 11/WG * * Seite 46, letzter Absatz *

## Beschreibung

Die Erfindung betrifft geformte, nicht staubende, nicht verbackende, rieselfähige Mastiziermittel auf Basis von 2,2'-Dibenzamidodiphenyldisulfid (DBD).

Mastiziermittel sind chemische Agenzien mit deren Hilfe die Viskosität von Naturkautschuk (NR) zeit- und energiesparend erniedrigt werden kann, im Vergleich zu der rein mechanischen Mastikation. Durch die Mastikation wird die Verarbeitbarkeit von wenig plastischem NR verbessert, d.h. die Füllstoff- und Chemikalienaufnahme wird erleichtert und das Verhalten beim Kalandrieren, Extrudieren und Spritzgießen wird positiv beeinflußt. Mastiziermittel wirken auch bei Synthese-Kautschuken viskositätserniedrigend, sofern diese in der Hauptkette Doppelbindungen enthalten, wie z.B. Polyisopren-Kautschuk, Polybutadien-Kautschuk oder Styrol-Butadien-Kautschuk. Die Mastikation kann auf einer Walze oder in einem Kneter durchgeführt werden (W. Hofmann, Kautschuk-Technologie, S. 419 und S. 429, Genter Verlag, Stuttgart, 1980).

Eine Vielzahl von Verbindungen, die mastizierend wirken, sind bekannt geworden. Industriell durchgesetzt haben sich jedoch nur Mastiziermittel auf Basis von Pentachlorthiophenol (PCTP) oder DBD.

Es ist bekannt, PCTP als Mastiziermittel in Forms seines Zinksalzes einzusetzen. Weiterhin ist bekannt, PCTP als Formulierung mit Aktivatoren (metallorganische Komplexe) und inaktiven Füllstoffen (Verteilungsmittel), wie z.B. Kaolin, als Mastiziermittel einzusetzten in Form von Pulver, beöltem Pulver oder Wachsgranulat (M. Abele und Th. Kempermann, Kautschuk + Gummi Kunststoffe 42 (1989) 209).

In der FR-A-1 580 550 sind Mastikationen mit Mischungen aus Zinksalzen von Fettsäuren und schwefelhaltigen, aromatischen Mastiziermitteln (z.B. DBD oder Zinksalz von PCTP) beschrieben. Analoge Mastiziermittel, die zusätzlich noch Eisenphthalocyanin enthalten, sind aus der DE-A-2 820 978 bekannt.

DBD ist als Mastiziermittel in Form von Pulver ebenfalls bekannt (vgl. Pepton 22, ein Mastiziermittel der Fa. Anchor Chemical, Ltd., Manchester (UK)).

Weiterhin sind Mastiziermittel aus DBD, Eisenphthalocyanin und einem Verdünnungsmittel, wie z.B. verschiedene Tone, Diatomenerde, Calciumcarbonat, Kieselerde oder Wachse, beschrieben (DE-A-2 440 092). Bevorzugtes Verdünnungsmittel ist wasserhaltiges Aluminiumsilikat. Es können aber auch Gemische der inerten, festen Verdünnungsmittel eingesetzt werden (vgl. Seite 6, Zeilen 10-16). Die verdünnungsmittelhaltigen Mastiziermittelformulierungen sind freifließende Pulver.

Der Begriff "Wachs" ist in der DE-A-2 440 092 nicht näher erläutert. Man kann jedoch davon ausgehen, daß technisch in großer Menge und kostengünstig verfügbare Produkte gemeint sind, wie z.B. Paraffine aus Erdöl.

Allen Mastiziermitteln oder Mastiziermittelformulierungen in Form von Pulver ist gemeinsam, daß sie einerseits mehr oder weniger fließ- oder rieselfähig sind und andererseits beim Handhaben, wie z.B. Abwiegen, Dosieren und Verarbeiten, stark stauben. Dies ist aus arbeitshygienischer Sicht ein großer Nachteil. Beölte Pulver zeigen zwar eine verminderte Neigung zum Stauben; sie sind in der Tat jedoch nicht völlig staubfrei, wenn sie noch Fließfähigkeit aufweisen sollen.

Pepton 66, ein kommerzielles Mastiziermittelgranulat der Fa. Anchor Chemical, Ltd., Manchester (UK), auf Basis von DBD neigt bei Lagerung unter Druck und erhöhter Temperatur zu Verbackungen, die eine moderne automatische Verwiegung und Dosierung des Mastiziermittels erschweren. Der Kleber in Pepton 66 besteht nach unseren IR-spektroskopischen Untersuchungen aus Paraffin und weist einen Schmelzpunkt von 48°C auf (DSC-Methode, Heizrate 10°C/min).

Geformte, nicht staubende, nicht verbackende, rieselfähige Mastiziermittel auf der Basis von DBD werden zunehmend von der kautschukverarbeitenden Industrie aus Gründen der Arbeitshygiene als auch aus Gründen der Arbeitsrationalisierung im Hinblick auf eine automatische Verwiegung und Dosierung des Mastiziermittels gefordert.

Geformte, unter Last nicht verklebende Mastiziermittel, hergestellt aus DBD, Tonerde, Prozeß-Öl, nicht-ionischem Emulgator und Wasser sind aus JP-A-59-193939 bekannt. Nachteilig bei diesen Produkten ist deren Herstellverfahren. So muß nach Granulation der wasserfeuchten Mischung das eingesetzte Wasser, gemäß Beispiel 20 Teile bezogen auf 100 Teile DBD, wieder verdampft werden. Dies stellt ein zeit- und kostenaufwendiger Arbeitsschritt dar.

Ein geformtes, einfach herstellbares und unter Druck und erhöhter Temperatur nicht verbackendes Mastiziermittel auf Basis von PCTP mit Paraffin als Kleber wurde kommerziell von der Bayer AG als Renacit 7/WG angeboten. Das in Renacit 7/WG als Kleber verwendete Paraffin ist laut "Handbuch für die Gummiindustrie" (S. 462-463, 2. völlig neu bearbeitete Ausgabe, Herausgeber: Bayer AG/Leverkusen, Geschäftsbereich Kautschuk, Anwendungstechnik, Redaktionsschluß 1.6.91) eine Mischung aus Öl und Wachs, d.h. eine Mischung aus flüssigem und festem Paraffin. Dieser Kleber zeigte einen Schmelzpunkt von 59°C (DSC-Methode, Heizrate 10°C/min).

Versuche, geformte, rieselfähige Mastiziermittel auf Basis von DBD nach Stand der Technik, entsprechend Renacit 7/WG, mit einer Mischung aus flüssigem und festem Paraffin als Kleber herzustellen, führten zu Produkten, die im Verbackungstest unter Druck und erhöhter Temperatur unerwartet zum Verkleben neigten (s. Beispiel 1 der Anmeldung), was eine automatische Verwiegung und Dosierung solcher Produkte für den Mastikationsprozeß ausschließt. Der Schmelzpunkt des angewendeten Klebers lag bei 60°C (DSC-Methode, Heizrate 10°C/min).

Aufgabe der vorliegenden Erfindung war es daher, geformte, einfach herstellbare, nicht staubende DBD-haltige Mastiziermittel zur Verfügung zu stellen, die beim Lagern unter Druck und erhöhter Temperatur nicht verbacken und somit stets einwandfrei rieselfähig sind und die sich in dem zu mastizierenden Kautschuk schnell und einwandfrei auf üblichen Mischaggregaten der kautschukverarbeitenden Industrie (z. B. Walzen, Kneter) einarbeiten und verteilen lassen.

Die Aufgabe wurde überraschenderweise durch Anwendung von bestimmten, festen Paraffinen als Kleber gelöst.

Gegenstand der Erfindung sind daher geformte, nicht staubende, nicht verklebende, rieselfähige Mastiziermittel gekennzeichnet durch einen Gehalt von 10 bis 70 Gew.-Teilen, bevorzugt 20 bis 60 Gew.-Teilen, insbesondere 30 bis 50 Gew.-Teilen an 2,2'-Dibenzamidodiphenyldisulfid (DBD), einen Gehalt von 50 bis 15 Gew.-Teilen, bevorzugt 48 bis 17 Gew.-Teilen, insbesondere 45 bis 20 Gew.-Teilen an inaktiven Füllstoffen, gegebenenfalls einen Gehalt von 0,01 bis 5 Gew.-Teilen, bevorzugt 0,05 bis 2 Gew.-Teilen, insbesondere 0,1 bis 1 Gew.-Teil, an Aktivatoren und einen Gehalt von 40 bis 15 Gew.-Teilen, bevorzugt 40 bis 17 Gew.-Teilen, insbesondere 40 bis 20 Gew.-Teilen an Paraffinen mit einem Erstarrungspunkt im Bereich von 50 bis 85°C, bevorzugt im Bereich von 50 bis 75°C, insbesondere von 50 bis 70°C (DIN ISO 2207), einer Nadelpenetration von 8 bis 25 in 1/10 mm, bevorzugt 8 bis 22 in 1/10 mm, insbesondere 8 bis 18 in 1/10 mm (DIN 51578, 25°C), einer Viskosität von 2 bis 5,5 mm²/s (DIN 51562, 100°C), und einem vom petrochemischen Raffinationsprozeß des Erdöls herrührenden Restölgehalt von weniger als 3 Gew.-Teilen, bevorzugt weniger als 2 Gew.-Teilen (DIN ISO 2908), bezogen auf das eingesetzte native Paraffin, wobei die Summe der eingesetzten Gew.-Teile betreffend DBD, inaktiven Füllstoffen, Aktivatoren und Paraffinen stets 100 Gew.-Teile ergeben soll.

Bevorzugte Paraffine im Sinne der Erfindung werden aus Erdöl gewonnen und repräsentieren eine Mischung aus n-Paraffinen und i-Paraffinen, wobei der n-Paraffinanteil in dieser Mischung etwa 51 bis 99 Gew.-Teile, bezogen auf die Gesamtparaffinmischung, beträgt. Diese Mischung aus n-Paraffinen und i-Paraffinen kann gegebenenfalls noch weitere n-Paraffine enthalten, welche nach dem Fischer-Tropsch-Verfahren aus Kohlenmonoxid und Wasserstoff hergestellt worden sind, wobei der Anteil der synthetischen n-Paraffine höchstens 15 Gew.-Teile, bevorzugt höchstens 9 Gew.-Teile, insbesondere höchstens 7 Gew.-Teile beträgt, bezogen auf die Gesamtmenge an nativem und synthetischem Paraffin.

Aktivatoren im Sinne der Erfindung sind die bekannten Verbindungen Eisenphthalocyanin und Eisenhemiporphyrazin (DE-A-2 440 092; Ullmann's Encyclopedia of Industrial Chemistry, 5. Aufl., S. 405, VCH Verlagsgesellschaft, Weinheim, 1993) oder Mischungen hieraus.

Inaktive Füllstoffe (Verdünnungsmittel) im Sinne der Erfindungen sind z.B. Kaolin, Calciumcarbonat, Diatomenerde, Kieselgur und Bariumsulfat, aber auch Gemische hieraus. Besonders bevorzugte inaktive Füllstoffe sind Kaolin und Calciumcarbonat.

Zur Formung des Mastiziermittels wird das DBD, die inaktiven Füllstoffe und gegebenenfalls die Aktivatoren jeweils als feine Pulver eingesetzt. Der mittlere Teilchendurchmesser dieser Stoffe beträgt < 200 µm, bevorzugt 0,01 bis 100 µm, insbesondere 0,1 bis 80 µm.

Ein bevorzugtes Verfahren zur Herstellung der geformten Mastiziermittel ist das diskontinuierliche Mischen der pulverförmigen Bestandteile in rotierenden Mischbehältern, wie z.B. Trommelmischern, gegebenenfalls auch mit eingebauten Mischwerkzeugen, wie z.B. Pflugschaufelmischern, Leitschaufelmischern oder Paddelmischern, als auch Mischer mit schnell rotierenden Mischwerkzeugen und feinteiliges besprühen der homogen vermischten, pulverförmigen Bestandteile mit geschmolzenen Paraffinen unter fortgesetztem Mischen. Es kommen aber auch kontinuierlich mischende Mischer in Frage.

Das feinteilig mit Paraffinen besprühte Pulvergemisch wird dann einem kontinuierlichen Einwellenmischer (Extruder), bevorzugt einem kontinuierlichen Zweiwellenmischer (Doppelschneckenextruder) mit bevorzugt gleichsinnig laufenden Wellen zugeführt. Durch geeignete Temperaturführung im Extruder werden die festen Paraffine im Sinne der Erfindung wieder geschmolzen und die erhaltene Paste durch eine geeignete Lochplatte zwecks Ausbildung von Extrusionsgranulaten gepreßt. Vorteilhaft werden Extruder mit einer Mischzone zur weiteren Homogenisierung des zu extrudierenden Produktes angewendet.

Bei einer weiteren Ausführungsform zur Herstellung von geformten Mastiziermitteln werden die Paraffine im Sinne der Erfindung als feinteiliges Sprühgranulat mit einem mittleren Teilchendurchmesser von < 1000 µm, bevorzugt 10 bis 800 µm, insbesondere 10 bis 600 µm, zusammen mit den anderen pulverförmigen Bestandteilen in einem Mischer gemischt und dann die homogene Mischung mit Hilfe eines Extruders zu Extrusionsgranulaten geformt.

Die Paraffine im Sinne der Erfindung können aber auch in geschmolzener Form zu den zu bindenden pulverförmigen, homogen vermischten Stoffe an geeigneter Stelle in den Extruder gepumpt werden.

Eine Paste, bestehend aus pulverförmigem DBD, pulverförmigen Füllstoffen und gegebenenfalls pulverförmigen Aktivatoren sowie geschmolzenen Paraffinen, kann auch mit Hilfe einer Kühlwalze durch Aufstreichen oder Aufgießen zu Schuppen oder mit Hilfe eines Pastillierbandes zu Pastillen verarbeitet werden.

Die geformten Mastiziermittel lassen sich in den zu mastizierenden Kautschuk hervorragend einarbeiten und verteilen.

Die geformten Mastiziermittel werden, je nach gewünschter Viskositätserniedrigung, in Mengen von 0,01 bis 3 Gew.-Teilen, bevorzugt 0,05 bis 1 Gew.-Teil, bezogen auf 100 Gew.-Teile Kautschuk, eingesetzt.

### Beispiele

### Beispiel 1 (Vergleichsbeispiel)

Im Labor wurde eine Mischung aus 40,8 Gew.-Teilen DBD-Pulver, 0,5 Gew.-Teilen Eisenphthalocyanin-Pulver und 33,2 Gew.-Teilen Kaolin-Pulver in einem 20 l-Trommelmischer der Fa. Lödige mit Pflugschareinbauten 10 min bei 150 upm gemischt. Sodann wurde die Pulvermischung in einem schnell-laufenden Labor-Mischer, bestückt mit messerförmigen Einbauten, mit 25,5 Gew.-Teilen geschmolzenem Paraffin, bestehend aus (a) 14,2 Gew.-Teilen eines festen Paraffins, welches aus Erdöl gewonnen wurde und frei von Zusätzen an synthetischen n-Paraffinen ist, mit einer Dichte von 0,825 g/ml bei 15°C nach DIN 51757, einem Erstarrungspunkt von 62,5°C nach DIN ISO 2207, einer Viskosität von 5 mm²/s bei 100°C nach DIN 51562, einer Nadelpenetration von 14 in 0,1 mm bei 25°C nach DIN 51579 und einem Restölgehalt von 0,75 Gew.-Teilen (bezogen auf 100 Gew.-Teile festes Paraffin) nach DIN ISO 2908 und (b) 11,3 Gew.-Teilen eines flüssigen Paraffins, welches aus Erdöl gewonnen wurde und frei von Zusätzen an synthetischen n-Paraffinen ist, mit einer Dichte von 0,860 g/ml bei 15°C nach DIN 51757, einer kinematischen Viskosität von 19,9 mm²/s bei 40°C nach DIN 51562, einem Pourpoint von max. -12°C nach DIN ISO 3016, einer Brechzahl nD 20 von 1,473 nach DIN 51423, einem Refraktionsinterzept von 1,045 nach DIN 51368 und einer VDK-Zahl von 0,815 nach DIN 51378, feinteilig besprüht und so gemischt, daß das DBD, das Kaolin und der Aktivator in der Paraffinmischung eine homogene Verteilung aufweisen. Mit einem gleichsinnig laufenden Doppelwellenextruder mit Mischzone und Lochplatte wurden dann Extrusionsgranulate hergestellt. Der Durchmesser der Granulen betrug 3,5 mm, die Länge der Granulen zwischen ca. 5 und 8 mm.

### Beispiel 2

Man arbeitete wie in Beispiel 1, wobei die 25,5 Gew.-Teile an geschmolzenem Paraffin ausschließlich aus dem festen Paraffin, welches unter (a) beschrieben ist, bestanden. Der flüssige Paraffinanteil, beschrieben unter (b), war null.

### Beispiel 3 (Vergleichsbeispiel)

Man arbeitete wie in Beispiel 2, verwendete jedoch als festes Paraffin (a) ein Paraffin, welches aus Erdöl gewonnen wurde und frei von Zusätzen an synthetischen n-Paraffinen war, mit einer Dichte von 0,848 g/ml bei 15°C nach DIN 51757, einem Erstarrungspunkt von 71°C nach DIN ISO 2207, einer Viskosität von 13,5 mm²/s bei 100°C nach DIN 51562, einer Nadelpenetration von 26 in 1/10 mm bei 25°C nach DIN 51579 und einem Restölgehalt von 3,0 Gew.-Teilen (bezogen auf 100 Gew.-Teile festes Paraffin) nach DIN ISO 2908.

### Beispiel 4

Das Verbackungsverhalten der nach Beispiel 1 bis 3 erhaltenen Extrusionsgranulate unter Druck und erhöhter Temperatur wurde wie folgt geprüft:

In ein senkrecht in einer Petrischale stehendes Glasrohr (Innendurchmesser 50,3 mm) wurden 50 g Extrusionsgranulat vorsichtig eingefüllt und mit einem Stempel (Außendurchmesser 47,0 mm) mit einem Druck von 0,1729 kg/cm² für 2,5 Tage bei 40°C Umgebungstemperatur belastet. Danach wurde die Meßapparatur auf 23°C abgekühlt und die Petrischale entfernt und das Granulat gegebenenfalls aus dem Rohr gedrückt. Beim Herausdrücken der Probe ist darauf zu achten, daß verbackene Granulen aus so geringer Höhe wie eben nur möglich auf die Untersuchungsfläche fallen, weil sonst der Untersuchungsbefund verfälscht wird. Der Grad der Verbackung wurde wie nachstehend bewertet.
- Bewertung 0:: Probe rieselt von selbst aus dem Glasrohr; keine Anbackung am Glas; keine Verbackungen einzelner Granulen.
- Bewertung 1:: Probe klebt am Glas und muß mit dem Stempel herausgedrückt werden; leichte Granulenverbackungen, die mit der Hand leicht gelöst werden können.
- Bewertung 2:: Probe klebt am Glas und muß mit dem Stempel herausgedrückt werden; mittlere Granulenverbackungen.
- Bewertung 3:: Probe klebt am Glas und muß mit dem Stempel herausgedrückt werden; starke Granulenverbackungen; Granulen lassen sich von einander nur unter teilweiser Zerstörung ablösen.

Die Versuchsergebnisse sind in Tabelle 1 zusammengestellt. Es ist klar ersichtlich, daß das erfindungsgemäße Produkt gemäß Beispiel 2 nicht verbackt und somit dem Produkt gemäß Beispiel 1 nach Stand der Technik klar überlegen ist.

**Tabelle 1**

| | Vergleichsbeispiel | | erfindungsgemäßes Beispiel Nr. 2 |
|---|---|---|---|
| | Nr. 1 | Nr. 3 | |
| Bewertung der Verbackungsneigung | 1 | 2 | 0 |

## Patentansprüche

1. Geformte, nicht staubende, nicht verklebende, rieselfähige Mastiziermittel, gekennzeichnet durch einen Gehalt von 10 bis 70 Gew.-Teilen an 2,2'-Dibenzamidodiphenyldisulfid (DBD), einen Gehalt von 50 bis 15 Gew.-Teilen an inaktiven Füllstoffen, einen Gehalt von 40 bis 15 Gew.-Teilen an Paraffinen mit einem Erstarrungspunkt im Bereich von 50 bis 85°C (DIN ISO 2207), einer Nadelpenetration von 8 bis 25 in 1/10 mm (DIN 51 578, 25°C), einer Viskosität von 2 bis 5,5 mm²/s (DIN 51 562, 100°C) und einem vom petrochemischen Raffinationsprozeß des Erdöls herrührenden Restölgehalt von weniger als 3 Gew.-Teilen (DIN ISO 2908), bezogen auf das eingesetzte native Paraffin, und gegebenenfalls einen Gehalt von 0,01 bis 5 Gew.-Teilen an Aktivatoren wobei die Summe der eingesetzten Gew.-Teile betreffend DBD, inaktiven Füllstoffen, Aktivatoren und Paraffinen stets 100 Gew.-Teile ergeben soll.

## Claims

1. Shaped, non-dusting, non-sticking, pourable masticating agents characterised by a content of 10 to 70 parts by weight of 2,2'-dibenzoamidodiphenyl disulfide (DBD), a content of 50 to 15 parts by weight of inactive fillers, a content of 40 to 15 parts by weight of paraffins having a solidification point in the range from 50°C to 85°C (DIN ISO 2207), a needle penetration of 8 to 25 in 1/10 mm (DIN 51578, 25°C), a viscosity of 2 to 5.5 mm²/s (DIN 51562, 100°C) and a residual oil content originating from the petrochemical petroleum refining process of less than 3 parts by weight (DIN ISO 2908), relative to the native paraffin used, and optionally a content of 0.01 to 5 parts by weight of activators, wherein the sum of the parts by weight used in relation to DBD, inactive filler, activators and paraffins should always be 100 parts by weight.

## Revendications

1. Agents de mastication préformés, ne donnant pas lieu à un dégagement de poussière, ne collant pas, coulants, caractérisés par une teneur de 10 à 70 parties en poids de disulfure de 2,2'-dibenzamidodiphényle (DBD), une teneur de 50 à 15 parties en poids de charges inactives, une teneur de 40 à 15 parties en poids de paraffines ayant un point de solidification de l'ordre de 50 à 85°C (norme DIN ISO 2207), une pénétrabilité à l'aiguille de 8 à 25 dans 1/10 mm (norme DIN 51578, 25°C), une viscosité de 2 à 5,5 mm²/s (norme DIN 51562, 100°C) et une teneur en huile résiduelle provenant d'un procédé de raffinage pétrochimique de pétrole de moins de 3 parties en poids (norme DIN ISO 2908), par rapport à la paraffine naturelle utilisée et le cas échéant une teneur de 0,01 à 5 parties en poids d'activateurs, la somme des parties en poids utilisées concernant le DBD, les charges inactives, les activateurs et les paraffines devant toujours donner 100 parties en poids.
